# EUROPÄISCHE PATENTANMELDUNG

(11) **EP 1 736 685 A2**
(43) Veröffentlichungstag der Anmeldung: **27.12.2006**
(21) Anmeldenummer: 06012828.7
(22) Anmeldetag: 22.06.2006
(51) Int. Cl.: F16F 9/512

(54) **Cabrioletfahrzeug mit Dämpfereinrichtungen**

(30) Priorität: 24.06.2005 DE 102005029694
(71) Anmelder: Wilhelm Karmann GmbH, 49084 Osnabrück (DE)
(72) Erfinder: Reddehause, Günther, 49448 Brockum (DE); Wilde, Thorsten, 61276 Weilrod (DE)

(57) **Zusammenfassung**

Es wird ein Cabriolet-Fahrzeug (1) mit Dämpfereinrichtungen zum Dämpfen von im Betrieb des Cabriolet-Fahrzeugs angeregten Schwingungen beschrieben. Erfindungsgemäß sind die Dämpfereinrichtungen als passive amplitudenselektive Dämpfereinrichtungen ausgebildet, welche in einem unteren Amplitudenbereich mit einer weicheren Dämpfercharakteristik als in einem oberen Amplitudenbereich ausgeführt sind, so dass eine Dämpfwirkung der Dämpfereinrichtungen bei kleinen Anregungsamplituden kleiner ist als bei größeren Anregungsamplituden.

## Beschreibung

Die Erfindung betrifft ein Cabriolet-Fahrzeug mit Dämpfereinrichtungen zum Dämpfen von im Betrieb des Cabriolet-Fahrzeugs angeregten Schwingungen.

In der Praxis wird versucht, das Fahrverhalten von Fahrzeugen unter Berücksichtigung eines gewünschten Fahrkomforts und einer erforderlichen Fahrsicherheit durch entsprechende Konfiguration des Fahrwerks sowie durch eine entsprechend verwindungssteif ausgeführte Karosserie des Fahrzeugs optimal einzustellen, um den im Betrieb des Fahrzeugs auf das Fahrzeug einwirkenden Kräften und den daraus resultierenden Fahrzeugbewegungen in gewünschter Art und Weise entgegenwirken zu können. Bei der Auslegung der vorgenannten Fahrzeugbaugruppen wird die Fahrdynamik betrachtet, welche ein Teilgebiet der technischen Mechanik bzw. der Fahrzeugdynamik darstellt und die sich mit den auf ein Fahrzeug einwirkenden Kräften und den daraus resultierenden Fahrzeugbewegungen befasst. Die Fahrdynamik selbst wird grundsätzlich in die Längsdynamik, die Querdynamik und die Vertikaldynamik eines Fahrzeugs unterteilt.

Die Längsdynamik befasst sich mit dem Zusammenwirken von Antriebs- oder Bremskräften an den Rädern und mit den Fahrwiderständen in Abhängigkeit von den Strecken- und Betriebsverhältnissen. Somit sind aus der Längsdynamik unter anderem wichtige Schlussfolgerungen für den Kraftstoffverbrauch, die Beschleunigungsfähigkeit und die Auslegung von Triebstrang und Bremsanlage erzielbar.

Die Querdynamik betrachtet die Kräfte, wie Seitenwind oder Fliehkräfte, die das Fahrzeug von der Fahrtrichtung ablenken. Ein Ausgleich dieser Kräfte kann nur durch Seitenführungskräfte der Reifen bzw. Räder erfolgen, wobei das gummibereifreifte Rad gegenüber seiner Mittelebene unter einem entsprechenden Schräglaufwinkel rollt. Von Einfluss sind auch die dynamische Radlast, die Antriebs- und Bremskräfte sowie die Reibungseigenschaften der Fahrbahn. Je nach Lage des Schwerpunkts, des Angriffspunkts der Windkräfte, der Konstruktion der Radaufhängung und der Reifenbeschaffenheit ergeben sich Fahreigenschaften, die zusammen mit den Lenkreaktionen des Fahrers auf das Fahrverhalten, die Fahrtrichtungshaltung bei Geradeausfahrt und die Fahrstabilität bei Kurvenfahrt schließen lassen.

Die Vertikaldynamik untersucht die senkrechten Kräfte und Bewegungen, die durch die Unebenheiten der Straße erzeugt werden und unter Zwischenschaltung von Reifen- und Fahrzeugfederung Hubschwingungen und Nickschwingungen um die Querachse erzeugen, die mit Hilfe von Dämpfereinrichtungen reduziert werden. Bei Kurvenfahrt ergibt sich ein von der Achsanordnung abhängiges Wanken um die Längsachse eines Fahrzeugs, das durch Stabilisatoren beeinflusst werden kann.

Dabei werden üblicherweise zur Dämpfung von im Betrieb eines Fahrzeugs auftretenden Schwingungen herkömmliche hydraulische Teleskopstoßdämpfer, deren Länge veränderlich ausgeführt ist und bei welchen Öl die Dämpfungsfunktion übernimmt, eingesetzt.

Darüber hinaus wird auch durch den Einsatz elektronischer Regelsysteme versucht, die Fahrdynamik eines Fahrzeugs zu verbessern, wobei die Längsdynamik beispielsweise durch ein Antiblockiersystem, die Querdynamik beispielsweise durch eine Fahrdynamikregelung mit gezielter Beeinflussung der Giermomente durch einen Bremseingriff sowie die Vertikaldynamik durch eine Verringerung der Wankneigung des Fahrzeugaufbaus und eine Beeinflussung der Dämpfungseigenschaften durch elektronische Fahrwerkregelung beeinflusst werden kann.

Derzeit werden so genannte aktive Fahrwerksysteme zur aktiven Reduktion von Fahrzeugaufbauschwingungen verwendet, welche aus Schleuder-, Wank- und Nickbewegungen um die Hochachse, die Längsachse und die Querachse des Fahrzeugs resultieren. Bei der Ansteuerung der aktiven Fahrwerksysteme wird die Karosserie als ideal starres Gebilde angesehen und die einzelnen Komponenten der aktiven Fahrwerksysteme werden derart angesteuert bzw. die Wirkungsweise der einzelnen Komponenten der Fahrwerksysteme wird jeweils derart eingestellt, dass Fahrzeugaufbauschwingungen in einem Frequenzbereich bis zu 5 Hz in gewünschter Art und Weise reduziert bzw. ganz vermieden werden.

Dabei stellen Schwingungsdämpfer mit kontinuierlich veränderlicher Dämpfercharakteristik, aktiv verdrehbare Aktuatoren in Stabilisatoren sowie längenveränderliche Aktuatoren im Bereich der Aufbaufederung eines Fahrzeugs Komponenten von aktiven Fahrzeugsystemen dar, welche in Abhängigkeit von über eine Sensoreinrichtung erfassten Fahrzeugbeschleunigungen und in einer Steuereinrichtung über entsprechende Rechenalgorithmen bestimmte Stellgrößen angesteuert werden, so dass die Fahrzeugaufbauschwingungen unter Berücksichtigung des aktuellen Betriebszustandes des Fahrzeugs in gewünschtem Umfang reduziert werden.

Aktive Fahrwerksysteme, welche mit längenveränderlichen Aktuatoren im Bereich der Aufbaufederung eines Fahrzeugs ausgebildet sind, sind beispielsweise als ein aktives elektrohydraulisches Federungssystem ausgeführt, das den Fahrzeugaufbau in allen Fahrsituationen auf gleichem Niveau halten soll. Mit derartigen Fahrwerksystemen werden sowohl die Federung und die Schwingungsdämpfung verändert als auch die Niveauregelung ermöglicht. Dabei sind zur Regelung in jedem Federbein vertikal verstellbare Hydraulikzylinder angeordnet. Je mehr Öl in den Hydraulikzylinder gepumpt wird, umso stärker wird die Feder vorgespannt und umso größer wird deren Federkraft. Der Ölfluss selbst wird durch Regel- und Sperrventile gesteuert. Über die Regelventile wird der Druck entweder zum Hydraulikzylinder oder zum Rücklauf geführt. Die Sperrventile schließen beispielsweise bei stehendem Motor oder bei Funktionsstörungen des Fahrwerksystems den Vorlauf. Alle Ventile werden vorzugsweise elektromagnetisch betätigt und sitzen als Ventileinheiten an den Achsen, wobei jedes Federbein einzeln regelbar ist.

Aktive Fahrwerksysteme mit kontinuierlich veränderlicher Charakteristik ausgeführten Schwingungsdämpfern bieten die Möglichkeit, die Dämpferrate innerhalb von Sekundenbruchteilen an den jeweiligen Betriebszustand anzupassen. Die sich selbst überprüfende Steuer- und Regelungseinrichtung umfasst beispielsweise Sensoren für Geschwindigkeit, Querbeschleunigung und Straßenzustand, eine Rechnereinheit mit intelligenter Software und Aktuatoren. Einer der Aktuatoren ist als ein Proportionaldämpfventil ausgebildet, mittels welchem die Dämpfkräfte zwischen einem minimalen und einem maximalen Wert stufenlos verstellbar sind.

Die aus der Praxis bekannten und mit aktiv verdrehbaren Aktuatoren in den Stabilisatoren ausgeführten aktiven Fahrwerksysteme umfassen unter anderem zwei aktive Stabilisatoren, einen Ventilblock mit integrierten Sensoren, eine Pumpe, einen Querbeschleunigungssensor, ein Steuergerät sowie weitere Versorgungskomponenten. Kernelemente solcher Fahrwerksysteme bilden die beiden aktiven Stabilisatoren, die anstelle von konventionellen mechanischen Stabilisatoren im Bereich der Vorder- und Hinterachse integriert sind. Der Aktuator ist ein hydraulisch betriebener Schwenkmotor, bei dem die Schwenkmotorwelle und das Schwenkmotorgehäuse mit jeweils einer Stabilisatorhälfte verbunden sind. Die aktiven Stabilisatoren wandeln den hydraulischen Druck in ein Torsions- bzw. über die Anbindung in ein Stabilisierungsmoment um.

Der hydraulische Druck wird über zwei elektronisch geregelte Druckregelventile derart gesteuert, dass die Wankbewegungen des Fahrzeugaufbaus bei Kurvenfahrt derart minimiert werden, dass einerseits eine hohe Agilität und Zielgenauigkeit über den gesamten Geschwindigkeitsbereich erreicht und ein optimales Eigenlenk- sowie ein gutmütiges Lastwechselverhalten erzeugt werden und andererseits der Fahrer über die verbleibenden Wankbewegungen entsprechende Rückmeldungen bezüglich des aktuellen Fahrzustandes erhält. Andererseits sind die Aktuatoren bei Geradeausfahrt bzw. sehr geringen Querbeschleunigungen drucklos, so dass die Drehfederrate des Stabilisators die Grundfederung nicht verhärten kann und die Kopierbewegung des Fahrzeugaufbaus reduziert wird.

Da Cabriolet-Fahrzeuge im Vergleich zu herkömmlichen Fahrzeugen aufgrund des fehlenden fest mit der Karosserie des Fahrzeugs verbundenen Fahrzeugdaches grundsätzlich eine geringere Torsionssteifigkeit aufweisen, sind diese daher bezüglich der Radanregungen sehr empfindlich. Deshalb sind bei herkömmlichen Cabriolet-Fahrzeugen zu den vorbeschriebenen Fahrwerksystemen zusätzliche Vorkehrungen erforderlich, um den Fahrkomfort sowie die Fahrsicherheit beeinträchtigende Karosserieschwingungen zu reduzieren. Dazu wird eine Steifigkeit der Fahrzeugkarosserie gegenüber Limousinen durch konstruktive Maßnahmen erhöht. Des Weiteren werden auch passive Karosserietilger oder aktive Schwingungsreduktionssystemen, wie aus der DE 198 20 617 A1 bekannt, vorgesehen.

Zusätzliche schwingungsdämpfende Karosserietilger und auch die Versteifungsmaßnahmen der Fahrzeugkarosserie führen jedoch nachteilhafterweise zu einer deutlichen Erhöhung des Fahrzeuggewichtes von Cabriolet-Fahrzeugen, was hinsichtlich eines angestrebten geringen Kraftstoffverbrauches sowie eines agilen Fahrverhaltens unerwünscht ist.

Aktive Fahrwerkssysteme bieten zwar die Möglichkeit, Karosserieschwingungen bei Cabriolet-Fahrzeugen ohne wesentliche Erhöhung des Fahrzeuggewichtes zu reduzieren, jedoch ist dazu ein hoher Steuerungs- und Regelungsaufwand erforderlich, der eine unerwünschte Erhöhung der Herstellkosten von Cabriolet-Fahrzeugen verursacht.

Der vorliegenden Erfindung liegt daher die Aufgabe zugrunde, ein Cabriolet-Fahrzeug zur Verfügung zu stellen, bei welchem im Betrieb auftretende Karosserieschwingungen im Vergleich zu herkömmlichen Cabriolet-Fahrzeugen bei geringem Fahrzeuggewicht und niedrigen Herstellkosten auf einfache Art und Weise reduziert sind.

Erfindungsgemäß wird diese Aufgabe mit einem Cabriolet-Fahrzeug gemäß den Merkmalen des Patentanspruches 1 gelöst.

Das erfindungsgemäße Cabriolet-Fahrzeug mit Dämpfereinrichtungen zum Dämpfen von im Betrieb des Cabriolet-Fahrzeug angeregten Schwingungen ist erfindungsgemäß mit als passive amplitudenselektive Dämpfereinrichtungen ausgebildeten Dämpfereinrichtungen ausgeführt, welche in einem unteren Amplitudenbereich mit einer weicheren Dämpfercharakteristik als in einem oberen Amplitudenbereich ausgeführt sind, so dass eine Dämpfwirkung der Dämpfeinrichtungen bei kleinen Anregungsamplituden, die beispielsweise durch Querfugen in der Fahrbahn oder einen Rauasphalt bewirkt werden, kleiner ist als bei größeren, beispielsweise bei Kurvenfahrten oder größeren Fahrbahnunebenheiten auftretenden Anregungsamplituden.

Passive amplitudenselektive Dämpfereinrichtungen wurden speziell für den Einsatz in Fahrzeugen mit hohen Karbsserieaufbauten, die dadurch einen hohen Fahrzeugschwerpunkt aufweisen, entwickelt und sind unter anderem aus der DE 103 25 877 A1 sowie aus der DE 103 21 351 A1 bekannt.

Aufwändige Versuchsreihen und Testfahrten haben ergeben, dass der Einsatz passiver amplitudenselektiver Dämpfereinrichtungen in Cabriolet-Fahrzeugen im Vergleich zu Cabriolet-Fahrzeugen, welche mit herkömmlichen und als hydraulische Teleskopstoßdämpfer ausgebildeten Dämpfereinrichtungen ausgeführt sind, zu einer wesentlichen Verbesserung des Fahr- und Abrollkomforts sowohl im offenen als auch im geschlossenen Zustand führt, ohne die Agilität und die Fahrdynamik eines Cabriolet-Fahrzeugs zu beeinträchtigen.

Durch die sich in Abhängigkeit der Amplitude verändernde Dämpfwirkung der passiven amplitudenselektiven Dämpfereinrichtungen besteht auf einfache Art und Weise die Möglichkeit, das Fahrwerk eines Cabriolet-Fahrzeugs derart abzustimmen, dass kleine Anregungen mit weich abgestimmter Kraft-Geschwindigkeitskennlinie gedämpft werden und erst bei größeren Amplituden der Dämpfereinrichtungen eine härter abgestimmte Kraft-Geschwindigkeitskennlinie das Fahrverhalten des Cabriolet-Fahrzeugs bestimmt, wobei die beiden Kennlinien individuell einstellbar sind.

Darüber hinaus ist durch den erfindungsgemäßen Einsatz passiver amplitudenselektiver Dämpfereinrichtungen in einem Cabriolet-Fahrzeug das bei Cabriolet-Fahrzeugen im Eigenfrequenzbereich zwischen 12 Hz und 20 Hz an sich bekannte Karosseriezittern sowie ein cabriolettypisches Lenkradzittern im Vergleich zu herkömmlichen Cabriolet-Fahrzeugen reduziert.

Dies wird dadurch erreicht, dass in unteren Amplitudenbereichen der Dämpfereinrichtungen die von den Feder-Dämpfersystemen des Fahrwerks eines Cabriolet-Fahrzeugs aufgebauten und in die Karosseriestruktur eingeleiteten Kräfte speziell im typischen Eigenfrequenzbereich von Cabriolet-Fahrzeugen und im Bereich der Radeigenfrequenz reduziert sind, ohne in dynamischeren Fahrzuständen eine zu weiche Dämpfung zur Verfügung stellen zu müssen.

Darüber hinaus bietet sich die Möglichkeit, die Attribute Road- sowie Body-NVH (Noise Vibration Harshness) im Frequenzbereich bis ca. 80 Hz durch die unterschiedlichen Dämpferkennlinien der passiven amplitudenselektiven Dämpfereinrichtungen auf einfache Art und Weise zu verbessern.

Durch die Herabsetzung der Schwingungsanregung der Fahrzeugkarosserie bietet sich zusätzlich die Möglichkeit, die bei herkömmlichen Cabriolet-Fahrzeugen vorgesehenen und ein Fahrzeuggewicht in unerwünschtem Umfang erhöhenden Versteifungsmaßnahmen am cabrioletspezifischen Rohbau zu verringern und somit das Rohbaugewicht eines Cabriolet-Fahrzeugs vorteilhafterweise herabzusetzen.

Zusätzlich liegt einem erfindungsgemäß ausgebildeten Cabriolet-Fahrzeug der Vorteil zugrunde, dass eine sportlichere Reifenabstimmung sowie der Einsatz sportlicherer Fahrwerkslager zur Dynamikverbesserung durch beispielsweise schnelleres und direkteres Lenkansprechen ohne gleichzeitigen Komfortnachteil gegenüber herkömmlichen Cabriolet-Fahrzeugen vorgesehen werden kann.

Zudem wird durch den Einsatz passiver amplitudenselektiver Dämpfereinrichtungen in Cabriolet-Fahrzeugen neben einer Reduktion von rotatorischen Lenkradvibrationen auch eine Verbesserung der Nasstraktion von frontgetriebenen Cabriolet-Fahrzeugen und eine Reduzierung eines untersteuernden Fahrverhaltens eines Cabriolet-Fahrzeugs auf nasser Fahrbahn erreicht, was zu einer Verbesserung der Fahrsicherheit führt.

Des Weiteren ist von Vorteil, dass aus der Praxis bekannte Cabriolet-Fahrzeuge im Bereich ihrer Fahrwerke ohne aufwändige konstruktive Maßnahmen kostengünstig mit passiven amplitudenselektiven Dämpfereinrichtungen bestückt werden können.

Weitere Vorteile und vorteilhafte Ausgestaltungen des Gegenstandes der Erfindung sind den Patentansprüchen, der Beschreibung und der Zeichnung entnehmbar.

Die Erfindung wird anhand eines Ausführungsbeispieles in der nachfolgenden Beschreibung unter Bezugnahme auf die Zeichnung näher erläutert.

Es zeigt:
- Fig. 1: eine dreidimensionale stark schematisierte Ansicht eines Cabriolet-Fahrzeugs;
- Fig. 2: eine schematisierte Darstellung einer passiven amplitudenselektiven Dämpfereinrichtung des Cabriolet-Fahrzeugs gemäß Fig. 1; und
- Fig. 3: die Dämpfereinrichtung gemäß Fig. 2 in einem zweiten Betriebszustand.

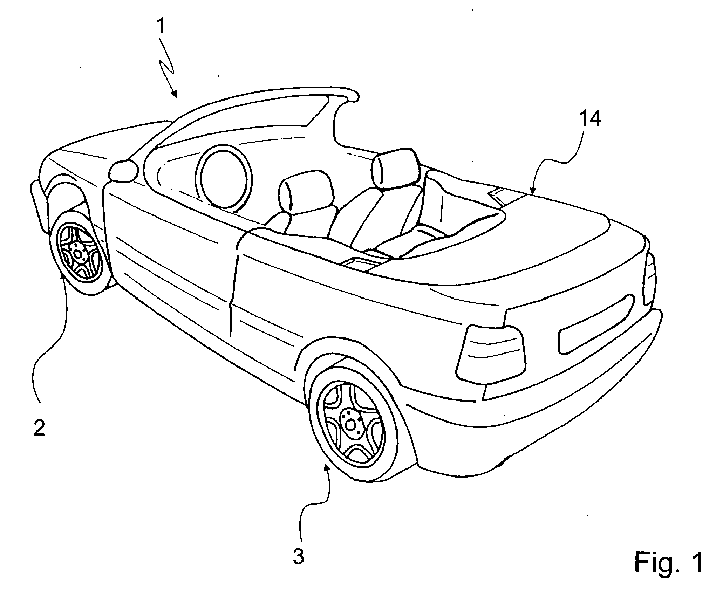

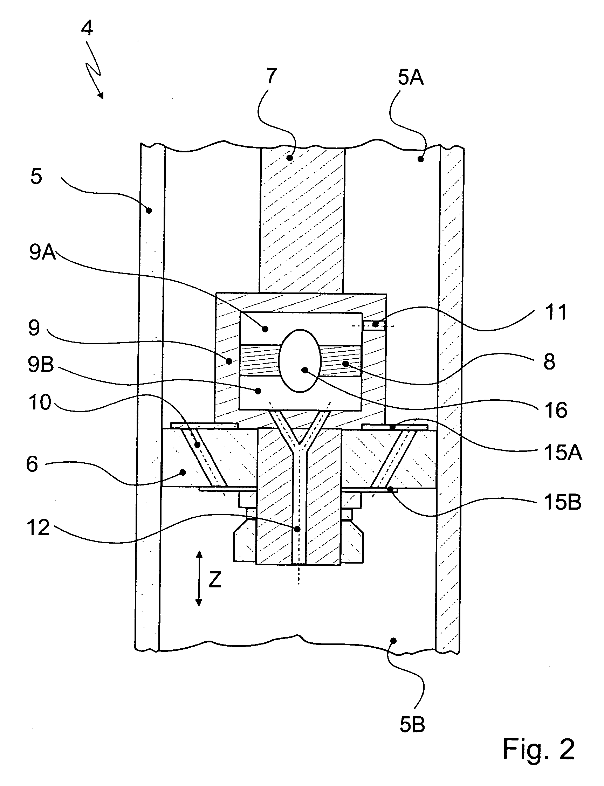

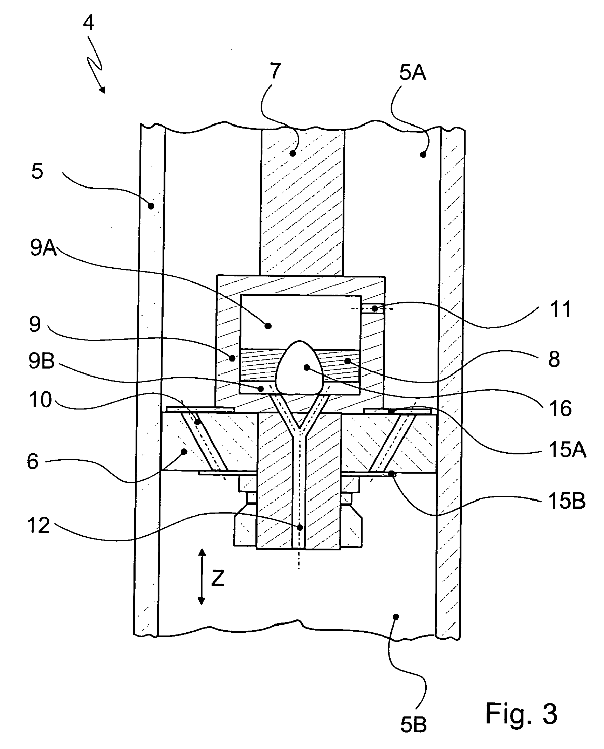

Fig. 1 zeigt ein Cabriolet-Fahrzeug 1 mit geöffnetem Fahrzeugdach, welches im Bereich seines Fahrwerks bzw. im Bereich der Räder der Fahrzeugvorderachse 2 und der Fahrzeughinterachse 3 mit in Fig. 2 und Fig. 3 näher dargestellten passiven amplitudenselektiven Dämpfereinrichtungen 4 ausgebildet ist, welche in einem unteren Amplitudenbereich mit einer weicheren Dämpfercharakteristik als in einem oberen Amplitudenbereich ausgeführt sind, wodurch eine Dämpfwirkung der Dämpfereinrichtungen 4 bei kleinen Anregungsamplituden kleiner ist als bei größeren Anregungsamplituden.

Fig. 2 und Fig. 3 zeigen eine mögliche Ausführungsform einer geeigneten passiven amplitudenselektiven Dämpfereinrichtung4 in einer stark schematisierten Längsschnittansicht, mittels der Karosserieschwingungen im Vergleich zu herkömmlichen Cabriolet-Fahrzeugen derart reduzierbar sind, dass eine signifikante Verbesserung des Abrollkomforts des Cabriolet-Fahrzeugs 1 gemäß Fig. 1 erreicht wird.

Die Dämpfereinrichtung 4 umfasst einen mit einem radseitig fest verbundenen Bauteil des Fahrwerks in Wirkverbindung stehenden verbundenen Zylinder 5, in welchem ein erster Steuerkolben 6 bzw. ein Hauptkolben in die durch den Doppelpfeil Z dargestellten Richtungen verschiebbar angeordnet ist. Des Weiteren ist ein vorliegend in eine fest mit dem Hauptkolben 6 verbundene Kolbenstange 7, die mit einer Fahrzeugkarosserie 14 des Cabriolet-Fahrzeugs wirkverbunden ist, integrierter zweiter Steuerkolben 8 vorgesehen, der je nach Amplitudengröße des Hauptkolbens bzw. des ersten Steuerkolbens 6 einen Bypass für dass im Zylinder 5 befindliche Hydraulikfluid zum ersten Steuerkolben 6 öffnet oder schließt.

Diese Funktionalität des zweiten Steuerkolbens 8 ist dabei unabhängig von der Position des ersten Steuerkolbens 6 und zudem rein passiv, da der zweite Steuerkolben 8 und damit der Bypass allein durch die Strömungs- und Druckverhältnisse im Inneren des Zylinders 5 der Dämpfereinrichtung 4 gesteuert wird.

Die Dämpfkräfte der Dämpfereinrichtung 4 werden durch Verschieben des ersten Steuerkolbens 6 in dem mit Hydraulikfluid befüllten Zylinder 5 bzw. durch Verschieben des zweiten Kolbens 8 in einem weiteren ebenfalls mit Hydraulikfluid befüllten und durch die Kolbenstange 7 gebildeten weiteren Zylinder 9 erzeugt.

Dabei werden die Dämpferkräfte bei kleinen Amplituden der Dämpfereinrichtung 4 mit einer weicheren Dämpfercharakteristik im Wesentlichen dadurch zur Verfügung gestellt, dass die Volumina der durch den Hauptkolben 6 voneinander getrennten Zylinderkammern 5A und 5B des Zylinders 5 durch Verschieben des zweiten Steuerkolbens 8 in die Verschieberichtungen Z im weiteren Zylinder 9 verändert werden.

In diesem Betriebszustand der Dämpfereinrichtung 4 wird die durch im Betrieb des Cabriolet-Fahrzeugs1 auftretenden Schwingungen der Fahrzeugkarosserie und der Räder bewirkte Relativbewegung zwischen der Kolbenstange 7 und dem Zylinder 5 im Wesentlichen durch Bewegungen des zweiten Steuerkolbens 8 im weiteren Zylinder 9 gedämpft, da entweder das Hydraulikfluid der oberen Zylinderkammer 5A des Zylinders 5 über eine Drosselbohrung 11 des weiteren Zylinders 9 in eine obere Zylinderkammer 9A des weiteren Zylinders 9 geführt wird, während in einer unteren Zylinderkammer 9B des weiteren Zylinders 9 befindliches Hydraulikfluid über einen Drosselkanal 12 in die untere Zylinderkammer 5B des Zylinders 5 geführt wird, oder das in der unteren Zylinderkammer 5B befindliche Hydraulikfluid über den Drosselkanal 12 in die untere Kammer 9B des weiteren Zylinders 9 und das Hydraulikfluid der oberen Kammer 9A des weiteren Zylinders 9 über die Drosselbohrung 11 in die obere Zylinderkammer 5A strömt. Dabei sind die Viskosität des Hydraulikfluides und die Durchmesser sowie die Längen der Drosselbohrung 11 und des Drosselkanals 12 zur Einstellung der weichen Dämpfercharakteristik entsprechend aufeinander abgestimmt.

Erst bei Auftreten größerer Amplituden, zu welchen im Zylinder 5 größere Drücke herrschen, wird eine härtere Dämpfercharakteristik der Dämpfereinrichtung 4 im Wesentlichen durch Verschieben des ersten Steuerkolbens 6 dargestellt, da der zweite Steuerkolben 8 das Hydraulikfluid nur solange aus der oberen Kammer 9A oder aus der unteren Kammer 9B verdrängt, bis er an der Innenwand des weiteren Zylinder 9 zum Anschlag kommt und anschließend eine weitere Verschiebung von Hydraulikfluid zwischen den Zylinderkammern 5A und 5B jeweils durch den ersten Steuerkolben 6 hindurch erfolgt.

In diesen Betriebszuständen kommt der zweite Steuerkolben 8 in der in Fig. 3 dargestellten Art und Weise mit einem elastischen und verformbaren Anschlagdämpfungselement 16, dass zur Geräuschminimierung beim Anlegen des zweiten Steuerkolbens 8 an der Innenwand des weiteren Zylinder 9 der Kolbenstange 7 vorgesehen ist, an dem weiteren Zylinder 9 derart zum Anliegen, dass der zweite Steuerkolben 8 nicht mehr weiter in Richtung der unteren Zylinderkammer 5B oder bei Anlage an der der oberen Zylinderkammer 5A zugewandten Begrenzungswand des weiteren Zylinders 9 nicht mehr weiter in Richtung der oberen Zylinderkammer 5A verschiebbar ist, und Hydraulikfluid zwischen der oberen Zylinderkammer 5A und der unteren Zylinderkammer 5B der Dämpfereinrichtung 4 durch Drosselbohrungen 10 des ersten Steuerkolbens 6 geführt wird, welche von Steuerorganen 15A und 15B mehr oder weniger in Abhängigkeit der im Zylinder 5 vorliegenden Druck- und Strömungsverhältnisse freigegeben werden.

Die Durchmesser der Drosselbohrung 11 und des Drosselkanals 12 der Kolbenstange 7 sowie der Drosselbohrung 10 des ersten Steuerkolbens 6 und die Wirkungsweise des Steuerorgans sind vorliegend derart aufeinander abgestimmt, dass über die weichere Dämpfungscharakteristik der Dämpfereinrichtung 4 Überlagerungen von Eigenfrequenzschwingungen der Fahrzeugkarosserie 14 und des Fahrwerks des Cabriolet-Fahrzeugs 1 in einem Frequenzbereich von 8 Hz bis 25 Hz, vorzugsweise in einem Frequenzbereich von 12 Hz bis 20 Hz, derart gedämpft werden, dass cabriolettypisches Karosseriezittern, Vibrationen und niederfrequente Abrollgeräusche zur Erhöhung einer Komfortqualitätswahrnehmung reduziert sind.

Des Weiteren ist mit der in Fig. 2 und Fig. 3 dargestellten Dämpfereinrichtung 4 eine an das Cabriolet-Fahrzeug 1 gemäß Fig. 1 derart angepasste weiche Dämpfungscharakteristik darstellbar, dass kleine Schwingungsanregungen in einem Frequenzbereich bis 80 Hz sowohl im offenen als auch im geschlossenen Zustand des Fahrzeugdaches derart gedämpft sind, dass vibrationsbedingte Geräuschentwicklungen im Bereich der Räder sowie im Bereich der Fahrzeugkarosserie im Vergleich zu herkömmlich ausgeführten Cabriolet-Fahrzeugen auf kostengünstige Art und Weise mit weniger konstruktiv aufwändigen Karosserieversteifungsmaßnahmen und ohne zusätzliche Karosserietilger reduziert sind.

Gleichzeitig ist mit der Dämpfereinrichtung 4 gewährleistet, dass bei größeren Amplituden der Kolbenstange 7, die beispielsweise während Kurvenfahrten auftreten, eine für die Gewährleistung einer Fahrsicherheit entsprechend größere bzw. härtere Dämpfercharakteristik ohne die von aktiven Fahrwerkssystemen bekannten aufwändigen Steuer- und Regelmaßnahmen zur Verfügung gestellt ist.

## Patentansprüche

1. Cabriolet-Fahrzeug (1) mit Dämpfereinrichtungen (4) zum Dämpfen von im Betrieb des Cabriolet-Fahrzeugs (1) angeregten Schwingungen,
**dadurch gekennzeichnet,**
**dass** die Dämpfereinrichtungen (4) als passive amplitudenselektive Dämpfereinrichtungen ausgebildet sind, welche in einem unteren Amplitudenbereich mit einer weicheren Dämpfercharakteristik als in einem oberen Amplitudenbereich ausgeführt sind, so dass eine Dämpfwirkung der Dämpfereinrichtungen (4) bei kleinen Anregungsamplituden kleiner ist als bei größeren Anregungsamplituden.

2. Cabriolet-Fahrzeug nach Anspruch 1,
**dadurch gekennzeichnet,**
**dass** die Dämpfereinrichtungen (4) mit einem ersten Steuerkolben (6) sowie einem damit wirkverbundenen zweiten Steuerkolben (8) ausgeführt sind und die Dämpferkräfte der Dämpfereinrichtungen (4) durch Verschieben der Steuerkolben (6, 8) in mit Hydraulikfluid befüllten Zylindern (5, 9) erzeugt werden, wobei die weichere Dämpfercharakteristik bei kleinen Amplituden im Wesentlichen durch Verschieben des zweiten Steuerkolbens (8) und die härtere Dämpfercharakteristik im Wesentlichen durch Verschieben des ersten Steuerkolbens (6) dargestellt wird, wobei der zweite Kolben (8) bei einer Darstellung der härteren Dämpfercharakteristik auf Anschlag ist.

3. Cabriolet-Fahrzeug nach Anspruch 2,
**dadurch gekennzeichnet,**
**dass** die weichere Dämpfungscharakteristik derart vorgesehen ist, dass Überlagerungen von Eigenfrequenzschwingungen der Fahrzeugkarosserie (14) und des Fahrwerks in einem Frequenzbereich von 8 Hz bis 25 Hz, vorzugsweise in einem Frequenzbereich von 12 Hz bis 20 Hz, gedämpft werden.

4. Cabriolet-Fahrzeug nach Anspruch 2 oder 3,
**dadurch gekennzeichnet,**
**dass** die weichere Dämpfungscharakteristik derart vorgesehen ist, dass kleine Anregungen in einem Frequenzbereich bis 80 Hz sowohl im offenen als auch im geschlossenen Zustand des Fahrzeugdaches derart gedämpft sind, dass vibrationsbedingte Geräuschentwicklungen im Bereich der Räder sowie im Bereich der Fahrzeugkarosserie (14) reduziert sind.
